# EUROPÄISCHE PATENTANMELDUNG

(11) **EP 3 923 218 A1**
(43) Veröffentlichungstag der Anmeldung: **15.12.2021**
(21) Anmeldenummer: 21178525.8
(22) Anmeldetag: 09.06.2021
(51) Int. Cl.: G06Q 10/10, G09B 5/06, G09B 7/00

(54) **COMPUTERIMPLEMENTIERTES DIGITALES BILDUNGSASSISTENZVERFAHREN UND COMPUTERIMPLEMENTIERTES DIGITALES BILDUNGSASSISTENSZSYSTEM**

(30) Priorität: 09.06.2020 DE 102020115289
(71) Anmelder: Humboldt-Universität zu Berlin, 10099 Berlin (DE)
(72) Erfinder: BEYER, Steven, 14059 Berlin (DE); EILERTS, Katja, 59494 Soest (DE)
(74) Vertreter: Puschmann Borchert Kaiser Klettner Patentanwälte Partnerschaft mbB

(57) **Zusammenfassung**

Die Erfindung betrifft ein computerimplementiertes digitales Bildungsassistenzverfahren mit einem Datenbanksystem und einem Benutzerarbeitssystem und einem Verarbeitungssystem umfassend die Schritte:
a. Zugang des Nutzers durch Eingabe der Nutzerdaten in dem Benutzerarbeitssystem;
b. Aktualisierung und Feststellung des Qualifizierungsstatus durch Abgleich der Nutzerdaten mit dem Datenbanksystem;
c. Aktualisierung und Bereitstellung des Kontextes zur Bildung durch das Verarbeitungssystem unter Hinzunahme der Datenbank;
d. Erzeugung durch das Verarbeitungssystem und/oder interaktive Bearbeitung durch den Benutzer im Benutzerarbeitssystem wenigstens eines Bildungsdatensatzes des Kontextes durch den Nutzer, wobei das Verarbeitungssystem organisatorische, verwaltungstechnische und didaktische Regelkreise aufruft;
e. Archivierung und Training eines Bildungsassistenzsystem-Klassifikators mit den erzeugten und/oder bearbeiteten Inhalten aus Schritt d., wobei dies durch das Verarbeitungssystem erfolgt;
f. Validierung der Schritte b. bis e.;
g. Aktualisierung der Inhalte des Bildungsassistenzsystems.

Ferner betrifft die Erfindung ein computerimplementiertes digitales Bildungsassistenzsystem mit einem Datenbanksystem und einem Benutzerarbeitssystem und einem Verarbeitungssystem und einem computerimplementierten digitalen Bildungsassistenzverfahren.

## Beschreibung

Die Erfindung betrifft ein computerimplementiertes digitales Bildungsassistenzverfahren mit einem Datenbanksystem und einem Benutzerarbeitssystem und einem Verarbeitungssystem.

Ferner betrifft die Erfindung ein computerimplementiertes digitales Bildungsassistenzsystem mit einem Datenbanksystem und einem Benutzerarbeitssystem und einem Verarbeitungssystem, und einem computerimplementierten digitalen Bildungsassistenzverfahren.

Die Einbindung smarter Technologien als digitale Assistenzsysteme in der Aus- und Fortbildung ist mit der Digitalisierung im Bereich der Bildung einem dynamischen Prozess ausgesetzt. Bisherige konventionelle Bildungsmodelle erschließen sich neue technische Möglichkeiten, die zudem die räumliche und zeitliche Verfügbarkeit von Lerninhalten und -gelegenheiten verändern.

Seit den 90er Jahren gibt es pedagogical agents, die schlagwortbasierte und/oder regelgeleitete Systeme waren und so ihren Weg über Lernprogramme in den Bildungsbereich fanden. Ihr Einsatzgebiet war ortsgebundenes, meist mono-thematisches und isoliertes Lernen. Durch die Fortschritte der mobilen Technologien und Methoden künstlicher Intelligenz können heutzutage umfassende Veränderungen im Einsatz verzeichnet werden. In diesem Bereich fokussiert sich der Stand der Technik vor allem auf das Lernen der Schüler und Schülerinnen mit mobilen Technologien und das Bereitstellen von Daten über sie, damit Lehrkräfte ihre Praxis ändern können. Des Weiteren sind bspw. intelligente Tutoring-Systeme dadurch geprägt, sich mit deklarativem Wissen zu beschäftigen und daraus Lerner-Modelle zu erstellen, die dann den Lernprozess individualisieren sollen. Auch in der Erwachsenenbildung haben sich Konzepte durchgesetzt, die durch Informations- und Kommunikations-Technologien ermöglicht werden. So finden sich eine Vielzahl an MOOCs, den Massive Open Online Courses, Sprachlern-Apps und Selbstlernplattformen, u.a. auch für Lehrkräfte auf dem Markt.

Im Stand der Technik finden multimodale mobile Informationssysteme und Roboterassistenzsysteme in Kombination mit sogenannten "Smart Home" Lösungen vielfältige Verwendungen. Die Unterstützung und Einbindung von Systemen der sogenannten künstlichen Intelligenz, kurz KI oder AI, wie sie z.B. für Softwareroboter, sogenannte Bots entwickelt werden, ist eine technische Komponente des hier offenbarten neuartigen und erfinderischen computerimplementierten digitalen Bildungsassistenzverfahrens und -systems.

Aus dem Internet ist u.a. die Lehrplattform edumentoring.de (Internet 29.04.2020, https://edumentoring.de/lehrplattformenl) bekannt, die allgemein Lösungen für Lehr-Lernplattformen anbietet und von einigen Bundesländern für Schulen empfohlen wird. Auf den weiterführenden Seiten von edumentoring.de werden Links zu schriftlichen Anleitungen und Videotutorials angegeben, die den Einstieg in die Arbeit mit den Lehr- bzw. Lernplattformen erleichtern sollen. Hier wird auch auf Moodle verwiesen, eine weitere Lernplattform, die die Präsenzlehrveranstaltungen mit eLearning und Blended Learning kombiniert. Dabei werden bei Moodle auf Knopfdruck z.B. geeignete Patientendaten aus dem Routine-AKIM als "Lehrfälle" in das eLearning System "Moodle" der MedUni Wien transferiert. Die Überleitung der Daten der Lehrfallpatienten erfolgt zur Vermeidung von Parallelentwicklungen zunächst in die wissenschaftliche AKIM Plattform RDA - Research Documentation Analysis. Dort findet auch die Pseudonymisierung der Daten statt. Danach erfolgt die Weiterleitung der pseudonymisierten Daten von der RDA-Datenbank in die Moodle-Datenbank. Im System Moodle stehen dann die Patientendaten den Lehrenden der MedUni zur weiteren Aufbereitung, wie Implementierung von Kursen etc., zur Verfügung. (Internet 29.04.2020 https://www.meduniwien.ac.at/web/mitarbeiterinnen/it-hilfe-support/it4science/plattformen/lhr/).

Aus dem druckschriftlichen Stand der Technik ist aus der Druckschrift DE 11 2016 001 104 T5 ein intelligenter automatisierter Assistent oder sogenannter virtueller Assistent bekannt, der als Schnittstelle zwischen menschlichen Benutzern und elektronischer Vorrichtung ausgelegt ist. Beispielhaft ist ein virtueller Assistent gezeigt, der es Benutzern ermöglicht, mit Vorrichtungen oder Systemen über natürliche Sprache in gesprochenen und/oder Textformen zu interagieren. Ein Benutzer kann eine gesprochene Eingabe mit einer Benutzeranfrage für einen virtuellen Assistenten, der auf einer elektronischen Vorrichtung betrieben wird, bereitstellen. Der virtuelle Assistent interpretiert die Benutzerabsicht aus der gesprochenen Eingabe und setzt die Benutzerabsicht in eine oder mehrere Aufgaben um. Die Aufgaben können dann durch das Ausführen von einem oder mehreren Diensten der elektronischen Vorrichtung durchgeführt werden, wodurch eine relevante Ausgabe in Reaktion auf die Benutzeranfrage zurückgegeben wird.

Im Stand der Technik kommen derzeit in der Beratung und Betreuung von Bildungsteilnehmenden und Lernenden sowie von Lehrenden folgende technische als auch nicht technische digitale und analoge Möglichkeiten bzw. Werkzeuge zum Einsatz, nämlich Mails, Chats und Foren, Lernplattformen, Beratung via Video oder Telefonie, Präsenzformate:
- Mails, Chats und Foren:
   Zur direkten, aber doch zeitlichen und örtlichen Kommunikation auf Distanz werden aktuell Mail- und Chatsysteme bzw. Foren verwendet. Die Chatsysteme und Foren können, aber sind nicht zwingend, Bestandteil von Lernplattformen.
- Lernplattformen, Datenbanken und Cloud-Speicher:
   In Abhängigkeit der Personalressourcen werden Unterlagen, Materialien, etc. mehr oder weniger didaktisch aufbereitet über Online-Plattformen zur Verfügung gestellt, die dann zur individuellen Nutzung den Teilnehmenden zur Verfügung stehen.
- (Video-)Telefonische Beratung:
   Da die Teilnehmenden und die Dozierenden häufig nicht in lokaler Nähe zueinander sind, werden dringende bzw. multiple Problemlagen über Beratungen auf Distanz via (Video-) Telefonie realisiert, die zusätzliche Vor- und Nachbereitungszeit umfassen.
- Präsenzformate:
   Je nach Zielsetzung werden auch analoge Präsenzformate innerhalb der Peergroup eingesetzt bzw. durch Dozierende begleitet.

Diese einzelnen Werkzeuge sind jedoch häufig auf einen spezifischen Bereich eingegrenzt, liefern nur zeitversetzt die gewünschten Ergebnisse und/oder benötigen zusätzlich große Personalressourcen.

Die Frage nach individuelleren Ausbildungs-, Fortbildungs- und Unterstützungsangeboten, insbesondere für Lehrkräfte und angehende Lehrkräfte im Schuldienst, ist im Allgemeinen und insbesondere für die mathematikdidaktische und grundschulpädagogische Forschung von besonderem Interesse, weil die Heterogenität in den Lehrer*innen-Kollegien aufgrund vielfältiger Qualifikationshintergründe zunimmt. Am Beispiel Berlins zeigt sich, dass im 1. Schulhalbjahr 2018/2019 in den Grundschulen bereits 22,1% der zu erteilenden Mathematikstunden von fachfremden Lehrenden gegeben werden und dieser Trend sich u.a. durch die gesteigerte Einstellung von Seiten- und Quereinsteigern fortsetzen wird (Senatsverwaltung für Bildung Jugend und Familie, 2019). Naheliegend ist hier der Einsatz von mobilen Informations- und Kommunikationstechnologien (IKT), wie ChatBot-basierte pedagogical conversational agents, die "den heterogenen Lernbedürfnissen, unterschiedlichen Lernbiografien und diversen Mediennutzungsinteressen entgegenkommen" (vgl. Herber und Waba 2011, zitiert nach de Witt, 2018, S. 995; Chounta, 2019; Döring & Rohangis Mohseni, 2018; Goertz, 2014; Roll & Wylie, 2016).

Die **Probleme** im Stand der Technik sind im Wesentlichen, dass die derzeit bekannten einzelnen Werkzeuge von Assistenzsystemen häufig auf einen spezifischen Bereich eingegrenzt sind, dabei insgesamt viele inhaltlich und zeitlich differenzierte Anfragen nötig sind und daher nur zeitversetzte, unvollständige Informationen für den Nutzer zur Verfügung stehen. Es fehlt ein intelligentes Assistenzsystem für die Zusammenführung von inhaltlich und zeitlich dislozierten Informationen und spezifischen Assistenzsystemen, die zudem über eine permanente, validierte, geregelte Aktualisierung verfügen.

Die bekannten Lösungen - sowohl analog als auch digital - sind optimierungsbedürftig, weil sie in ihrer Eigenständigkeit nicht die bestmögliche Leistung erbringen. Außerdem sind sie häufig von anderen Faktoren abhängig, u.a. Reaktionsschnelligkeit anderer Menschen, der eigenen Daten- & Mediennutzungskompetenz, des eigenen Zeitmanagements, etc. Bei analogen bzw. personengebundenen Angeboten, bspw. Coaching und Supervision, zeigt sich, dass sie häufig an einen bestimmten Ort und/oder Zeit gebunden sowie sehr ressourcenintensiv sind. Sie können daher nicht beliebig oft oder ad hoc im Prozess genutzt werden, was allerdings für eine Lehrkraft oder auch angehende Lehrkraft im Unterricht mit unmittelbarem Bedarf notwendig wäre.

Die digitalen Angebote setzen im Gegensatz zu analogen Angeboten bei den Lernenden hinreichend Selbstregulations- und Mediennutzungskompetenzen voraus. Erschwert wird dies zusätzlich durch die Orientierung auf formalisierte Bildungskontexte und Anregungsarmut. Dies führt schnell dazu, dass Plattformen vom eigentlichen Einsatzort isoliert digital existieren, zum Datengrab werden, Lernende dieser sodann keine gesteigerte Beachtung schenken und somit die angebotenen Informationen nicht für ihren individuellen Lernprozess fruchtbar machen können.

Der vorliegenden Erfindung liegt die **Aufgabe** zugrunde, ein computerimplementiertes digitales Assistenzsystems zur (ad hoc) tätigkeitsspezifischen individuellen Unterstützung von Professionalisierungsprozessen bzw. ein computerimplementiertes digitales Bildungsassistenzverfahren mit einem Datenbanksystem und einem Benutzerarbeitssystem und einem Verarbeitungssystem sowie ein computerimplementiertes digitales Bildungsassistenzsystem mit einem Datenbanksystem und einem Benutzerarbeitssystem und einem Verarbeitungssystem, und einem computerimplementierten digitalen Bildungsassistenzverfahren aufzuzeigen, das die Nachteile des Standes der Technik überwindet und ein hocheffizientes, insbesondere zeitnahes Fragen / Lernen / Problemlösen während der Ausbildung / Fortbildung / Bildung ermöglicht. Ferner eine Entwicklung eines digitalen, intelligenten Assistenzsystems zur ad hoc tätigkeitsspezifischen Unterstützung von Professionalisierungsprozessen bei Lehrkräften oder insbesondere bei angehenden Lehrkräften im Kontext von Qualifizierungsmaßnahmen in Verbindung mit unterrichtlichem Handeln bzw. Probehandeln.

Ein weitere Aufgabe ist es Nutzern, insbesondere Lehrkräften, gestützt durch Methoden bzw. Verfahren der künstlichen Intelligenz (KI, AI), der digitalen Inhaltsaufbereitung von Telefonkonferenz / Videokonferenz Beratungen und/oder analoge Präsenzformaten und Konzepten des Mikrolernens als Chatbot eine inhaltlich adaptive, zeitlich und örtlich flexible sowie tätigkeitsspezifische Begleitung von Qualifizierungsmaßnahmen und "ad hoc" Professionalisierungs-Unterstützung bereit zu stellen.

Die derzeit bekannten analogen und digitalen Werkzeuge und Lösungen erbringen nicht die nötige Leistung, da sie von unkalkulierbaren Faktoren abhängig sind, u.a. Reaktionsschnelligkeit anderer Menschen, der eigenen Daten- und Mediennutzungskompetenz und / oder der eigenen Selbstorganisation. Bei derzeit bekannten analogen bzw. personengebundenen Angeboten, bspw. Coaching und Supervision, zeigt sich, dass sie an einen bestimmten Ort und Zeit gebunden sowie sehr ressourcenintensiv sind. Sie können daher nicht beliebig oft oder ad hoc im Prozess genutzt werden, was allerdings für eine, insbesondere angehende, Lehrkraft im Unterricht mit unmittelbarem Bedarf notwendig ist.

**Gelöst** wird diese Aufgabe mit einem computerimplementierten digitalen Bildungsassistenzverfahren mit einem Datenbanksystem und einem Benutzerarbeitssystem und einem Verarbeitungssystem gemäß Hauptanspruch sowie weiter mit einem computerimplementierten digitalen Bildungsassistenzsystem mit einem Datenbanksystem und einem Benutzerarbeitssystem und einem Verarbeitungssystem.

Das computerimplementierte digitale Bildungsassistenzverfahren mit einem Datenbanksystem und einem Benutzerarbeitssystem und einem Verarbeitungssystem
umfasst die Schritte:
a. Zugang des Nutzers durch Eingabe der Nutzerdaten in dem Benutzerarbeitssystem;
b. Aktualisierung und Feststellung des Qualifizierungsstatus durch Abgleich der Nutzerdaten mit dem Datenbanksystem;
c. Aktualisierung und Bereitstellung des Kontextes zur Bildung durch das Verarbeitungssystem unter Hinzunahme der Datenbank;
d. Erzeugung durch das Verarbeitungssystem und/oder interaktive Bearbeitung durch den Benutzer im Benutzerarbeitssystem wenigstens eines Bildungsdatensatzes des Kontextes durch den Nutzer, wobei das Verarbeitungssystem organisatorische, verwaltungstechnische und didaktische Regelkreise aufruft;
e. Archivierung und Training eines Bildungsassistenzsystem-Klassifikators mit den erzeugten und/oder bearbeiteten Inhalten aus Schritt d., wobei dies durch das Verarbeitungssystem erfolgt;
f. Validierung der Schritte b. bis e.;
g. Aktualisierung der Inhalte des Bildungsassistenzsystems.

Insbesondere können vorteilhafter Weise Inhalte und/oder Relation und/oder Bezüge in das Datenbanksystem ergänzt und/oder aktualisiert einbringbar sein, wobei dies durch dozierende Benutzer erfolgt, wobei diese über das Benutzerarbeitssystem erfolgt.

Weiter ist es vorteilhaft, wenn Eingaben in Schritt d. über ein multimodales Signalerkennungs- und Verarbeitungsprogramm erfolgen, beispielsweise in einer kleinen Ausführungsvariante als Sprach- und/oder Videoerkennungsprogramm. Es können durch eine große Vielfalt von erfassenden Sensoren nicht nur gesprochene Worte und geschriebene Sprache erfasst, sondern weitere als Biosignale erfassbare Eingaben des Benutzers aufgenommen und verarbeitet werden. Es können insbesondere neben dem normalen Sprechen oder Schreiben, beispielsweise lautloses Sprechen, Airwriting - das dreidimensionale Bewegungen der Hand beim Schreiben in die Luft, Gesten, und dgl. erfasst werden. Weitere thermische Biosignale können ebenso erfasst und verarbeitet werden, beispielsweise zählt hierzu auch die Gehirnaktivität des Benutzers zu erfassen und zu interpretieren. Letztendlich werden diese Eingaben in computerinterpretierbaren Text / Eingaben / Befehle umgewandelt.

Das computerimplementierte digitale Bildungsassistenzsystem mit einem Datenbanksystem und einem Benutzerarbeitssystem und einem Verarbeitungssystem, und einem hier offenbarten computerimplementierten digitalen Bildungsassistenzverfahren,
ist dadurch gekennzeichnet, dass das System aufweist:
- ein multimodales Signalerkennungs- und Verarbeitungstool vorgesehen ist, das menschliche Biosignale, ausgewählt aus:
   elektrischen, mechanischen, kinetischen, akustischen, thermischen und/oder chemischen Signalen
   in maschinenlesbare Informationen umsetzt und/oder in andere Modalitäten übersetzt,
   und/oder
- ein Anwendungs- und Analysetool zur Anwendung und Analyse statistischer Methoden und/oder Methoden der künstlichen Intelligenz verfügt, wobei Relationen und Bezüge von Inhalten im Zugriff herstellbar sind und einen Bildungsassistenzsystem-Klassifikators trainieren kann,
   und/oder
- ein Bereitstellungstool zur Bereitstellung pädagogischer Systeme, wobei dieses empirische Ergebnisse digitalisiert bereitstellt und eine Aufbereitung von Inhalten didaktisch unterstützt.
   und/oder
- ein Autorisierung-/ldentifikationstool zur Verbindung über eine jeweilige Datenverbindung, Internetverbindung, Intranet Verbindung zu der Datenbank und/oder dem Verarbeitungssystem.

Es werden, wie bereits ausgeführt, insbesondere durch eine große Vielfalt von erfassenden Sensoren nicht nur gesprochene Worte und geschriebene Sprache erfasst, sondern weitere als Biosignale erfassbare Eingaben des Benutzers. Diese Biosignale im Allgemeinen werden erfasst, segmentiert, klassifiziert und verarbeitet. Weitere thermische Biosignale können ebenso erfasst und verarbeitet werden, beispielsweise zählt hierzu auch die Gehirnaktivität des Benutzers zu erfassen und zu interpretieren.

Das Benutzerarbeitssystem ist in einer besonders bevorzugten Ausführungsvariante auf einem Endgerät ausführbar, wobei dieses insbesondere ausgewählt ist aus der Liste:
mobiles Endgerät, Smartphone, Phablet, Smartwatch, Smart speaker, Smartband, smart lenses, PC, Tablet, Notebook mit Sprach- und/oder Video- und/oder Texteingabe- und/oder Biosignalerkennungsmöglichkeit, wobei wenigstens temporär ein Netzwerk- und/oder Internetzugang bei Verwendung besteht.

Bei Lehrkräften oder insbesondere angehenden Lehrkräften, vor Allem in der eigenen Aus- und Fortbildung, im Kontext von Qualifizierungsmaßnahmen in Verbindung mit unterrichtlichem Probehandeln für die Unterrichtspraxis ist dieses Verfahren bzw. dieses System von besonderer Bedeutung, da zeitnah und ortsunabhängig eine solide und fundierte Begleitung erfolgt, die auf unkalkulierbare menschliche Faktoren verzichtet.

Die Unterstützung und Einbindung von Systemen der sogenannten künstlichen Intelligenz (KI/AI), wie sie z.B. für Softwareroboter (bots) entwickelt werden, ist eine technische Komponente des erfinderischen computerimplementierten digitalen Assistenzsystems.

Durch den erfinderischen digitalen Assistenten im Anwendungsfall eines Chatbots, der diese Werkzeuge bzw. ihre Funktionen bündelt und mittels KI-Methoden unterstützt und "intelligent" agiert, werden die Betreuung und Beratung für Fort- und Ausbildungen allgemein und von Lehrkräften im speziellen im Sinne des mobile / workplace learning bereitgestellt und bestehende Assistenzsysteme zusammengeführt und optimiert.

Die durch das erfinderische digitale Assistenzsystem zu unterstützenden Werkzeuge greift u.a. auf folgende derzeit disloziert eingesetzte technischen Werkzeuge zu:
- Mails;
- Chats und Foren, ggf. mit Sprach/Texttools, die das gesprochene Wort in Text umsetzen und eine damit eine inhaltliche Analyse ermöglichen;
- Lernplattformen, Datenbanken und Cloud-Speicher, die im Einzelfall bereits didaktisch aufbereitet sind und/oder mit dem digitalen Assistenzsystem didaktische Hilfen vorschlagen;
- Individuelle Telefonkonferenz / Videokonferenz Beratung und/oder analoge Präsenzformate innerhalb der Peergroup, ggf. mit Sprach/Texttools, die das gesprochene Wort in Text umsetzen und eine damit eine inhaltliche Analyse ermöglichen, wobei die Ergebnisse mit dem digitalen Assistenzsystem didaktische Hilfen vorschlagen nach Art eines FAQ-Dienstes bereitstellen.

Der Ansatz des mobile learning betont eine Idee des Lernens, das in Bewegung, an verschiedenen Orten und Zeiten stattfindet und sich somit gut in den Alltag von Aus- bzw. Fortzubildenden sowie insbesondere von Lehrkräften einpasst, da insbesondere der Alltag von Lehrkräften von ständigen Kontextwechseln geprägt ist (Aubusson, Schuck, & Burden, 2009; de Witt, 2018). Diese Entgrenzung des Lernens wird sprachlich durch den Begriff des Kontextes unterstrichen, der nicht nur Ort und Zeit umfasst, sondern auch das Verhältnis zum Lerngegenstand beschreibt. Außerdem umfasst er neben formalen, auch informale Bildungskontexte, die gezielt mittels mobiler Geräte unterstützt werden (Döring & Rohangis Mohseni, 2018; Gloerfeld, 2018; Seipold, 2018). Vielfach stellen Autoren den besonderen Bedarf von besserem, personalisiertem Support insbesondere für Lehrkräfte im Unterricht sowie in berufsbegleitenden Qualifizierungsmaßnahmen heraus und fordern diese Forschungslücke intensiver zu betrachten (Aubusson et al., 2009; Baran, 2014; Roll & Wylie, 2016; Seipold, 2018). Die technische Grundlage bildet SAP conversational AI. Dies ist eine open-source Plattform zum Entwickeln, Trainieren, Analysieren und Verbreiten von Chatbots, die mittels der KI-Methode des Natural Language Processing eine adaptive, menschen-ähnliche und natürlichsprachige Interaktion mit der Maschine ermöglicht. Dazu kommen - neben den digitalen Hilfen - selbstproduzierte und auf exemplarisch ausgewählten Aus- und Fortbildungsinhalten basierende Bildungsmedien wie Texte, Podcasts und Videos, die dann als Learning-Bits in das System eingespeist werden.

Es ist mittels des hier vorgestellten Verfahrens bzw. Systems möglich, die Ausführung eines digitalen Assistenzsystems, das gestützt durch Methoden bzw. Verfahren Künstlicher Intelligenz (KI) und Konzepten des Mikrolernens als Chatbot den Lehrkräften eine inhaltlich adaptive, zeitlich und örtlich flexible sowie tätigkeitsspezifische Begleitung bei Qualifizierungsmaßnahmen und ad hoc Professionalisierungsunterstützung am Ausbildungs- und Arbeitsplatz bietet, zu realisieren und umzusetzen. Dazu werden auch Funktionen bekannter Werkzeuge kombiniert, die sich an den Kernaufgaben im Aus- und Fortbildungskontext und darauf bezogene Handlungen orientieren.

Zum einen kann so ein Lernmodul betrieben werden, das auf Basis der learning-bites die schnelle Wiederholung und Auffrischung von Aus- und Fortbildungsinhalten ermöglicht und so beispielsweise und insbesondere die Planungs- und Lehrtätigkeit sowohl von angehenden als auch im Berufsleben stehenden Lehrkräften bei spezifischen Anforderungssituationen in der Lehrpraxis unterstützt werden. Dieses Modul kann bspw. neben den theoretischfachdidaktischen Inhalten auch wichtige Informationen zur Passung der unterrichtspraktischen Inhalte zur Klassenstufe, zum benötigten Vorwissen, zu den Zeitpunkten des Einsatzes u. ä. geben, was die Forschung als wichtige Grundvoraussetzung für die Realisierung von Arbeitsaufträgen in der Erprobungsphase und damit für einen vollständigen Lernweg in einer Aus-/Fortbildung ermittelt hat. Daneben soll es auch lernwegstrukturierende Hilfen geben, z.B. organisatorische Hinweise zu Arbeitsaufträgen, Fristen oder Begleitangeboten, aber auch zur Realisierung von Arbeitsaufträgen bekommen die Aus- und Fortzubildenden sowie insbesondere Lehrkräfte Planungshilfen, die mit dem Lernmodul in Verbindung stehen, und Hinweise zu weiteren Materialien bzw. hilfreichen Links bietet. Bei der Durchführung der Arbeitsaufträge bekommen sie dann Dokumentationshilfen, die auf die Qualifizierungsmaßnahme abgestimmt sind und die wichtigsten Inhalte festhalten. Über alle Module hinweg gibt es reflexionsanregende Komponenten, die in situ Selbst- und Fremdreflexionen bspw. über Aspekte des eigenen Lernwegs oder auch die Arbeitsprozesse und -produkte anregen sollen und auf die später in Präsenzveranstaltungen zurückgegriffen sowie in eine erneute Reflexion mit anderen Teilnehmenden eingebracht werden kann.

Ferner ist die Realisierung eines hybriden Lernraums möglich, der die digitalen und analogen Lernkontexte erstmalig zusammenführt und einen Austausch ermöglicht. Aus- und - Fortzubildende sowie insbesondere angehende Lehrkräfte erhalten durch die Verknüpfung von Messenger-Dienst, Methoden künstlicher Intelligenz und einem pädagogischem System, das auf empirischen Ergebnissen basiert, mit viel geringeren Selbstlern- und Mediennutzungskompetenzen eine individuellere Unterstützung und Support, während sie an Qualifizierungsmaßnahmen teilnehmen und damit verbundene Aufgaben erledigen. Sie müssen nicht auf Antworten der Dozierenden bzw. Ausbildern warten, können jederzeit sowie überall das System für Planungen, Dokumentationen und Wiederholungen nutzen und auch die Dozierenden bzw. Ausbilder müssen weniger Zeit und Anstrengungen aufwenden, um auch außerhalb des Seminarraums betreuen zu können. Das sorgt insbesondere dafür, dass der Lernprozess seltener unterbrochen bzw. abgebrochen oder unvollständig durchlaufen wird und ressourcenschonender abläuft.

Durch die Mobilität und Kompatibilität des Systems über die Grenzen der Betriebssysteme oder Gerätegrenzen hinweg, wird der lernzentrierte Gedanke des mobile-learning in der technologischen Gestaltung für Aus- und Fortbildungen sowie Qualifizierungsmaßnahmen für umgesetzt. Eine vergleichbare Umsetzung und Realisierung in analoger Form ist so nur unter immensem Ressourcenaufwand möglich und durch einen Dozierenden allein schon gar nicht mehr möglich. Der Einsatz der KI-basierten und mobilen Technologie ermöglicht einen qualitativen Fortschritt in der individuellen Begleitung von Professionalisierungsprozessen bei in der Aus- und Fortbildung sowie bei Qualifizierungsmaßnahmen als auch in der alltäglichen Arbeits- bzw. Unterrichtspraxis.

Weiter ist die Realisierung eines pedagogical conversational agent (pca) möglich, der gestützt durch die Methoden der künstlichen Intelligenz (KI) und Konzepten des Mikrolernens als Chatbot den Aus- und Fortzubildenden sowie angehenden und schon im Alltag stehenden Lehrkräften eine inhaltlich adaptive, zeitlich und örtlich flexible Weiter- bzw. Aus- als auch Fortbildungsbegleitung und ad hoc Unterstützung bietet. Dazu kann es mehrere Funktionsbereiche geben, die sich an den Kernaufgaben im Fortbildungskontext und fortbildungsbezogenen Handlungen orientiert.

Insbesondere bei der Lehrerausbildung kann dieses Modul bspw. neben den theoretischfachdidaktischen Inhalten auch wichtige Informationen zur Passung der unterrichtspraktischen Inhalte zur Klassenstufe, zum benötigten Vorwissen, zu den Zeitpunkten des Einsatzes geben, was die Lehre als wichtige Grundvoraussetzung für die Realisierung von Arbeitsaufträgen in der Distanzphase und damit für einen vollständigen Lernweg in einer Fortbildung ermittelt hat.

Die digitalen Angebote setzen im Gegensatz zu analogen Angeboten bei den Lernenden hinreichend Selbstregulations- und Mediennutzungskompetenzen voraus. Erschwert wird dies zusätzlich durch die Orientierung auf formalisierte Bildungskontexte und Anregungsarmut. Dies führt schnell dazu, dass Plattformen vom eigentlichen Einsatzort isoliert digital existieren, zum Datengrab werden, Lernende dieser keine gesteigerte Beachtung schenken und somit die angebotenen Informationen nicht für ihren individuellen Lernprozess fruchtbar machen können.

Dazu werden Systeme mit Funktionen bekannter Werkzeuge miteinander im erfinderischen digitalen Assistenzsystem in einem digital abstimmbaren Regelkreis kombiniert, die sich an den Kernaufgaben im Aus- und Fortbildungskontext und darauf bezogene Handlungen orientieren.

Dadurch werden auf Basis der durch das erfinderische Assistenzsystem bereitgestellten sogenannten learning-bites ("mundgerechte Lehrinhalte") schnelle Wiederholungen und Auffrischungen von Aus- und Fortbildungsinhalten durch den oder die Nutzer, hier z.B. Lehrkräfte, trainiert (ermöglicht) und damit die Planungs- und Lehrtätigkeit der Lehrkräfte bei der Ausarbeitung ihrer Arbeitsaufträge für die Ausbildungs- und Arbeitspraxis durch aktuelle und validierte Lehrinhalte unterstützt. Diese Lehrinhalte können beispielsweise u.a. den theoretisch fachdidaktischen Inhalten auch wichtige Informationen zur Passung der unterrichtspraktischen Inhalte zur Klassenstufe, zum benötigten Vorwissen, zu den Zeitpunkten des Einsatzes geben.

Weiter können forschungsrelevante Analysen und Auswertungen durch das erfinderische Assistenzsystem für die Realisierung von Arbeitsaufträgen in einer Erprobungsphase und damit für einen vollständigen Lernweg in einer Aus-/Fortbildung erfolgen und bereitgestellt werden.

Bei der Durchführung von Arbeitsaufträgen können Dokumentationshilfen, die auf die Qualifizierungsmaßnahme abstimmbar sind, bereitgestellt werden.

Weiter stellt das erfinderische Assistenzsystem Werkzeuge für reflexionsanregende Komponenten bereit, die in situ Selbst- und Fremdreflexionen bspw. über Aspekte des eigenen Lernwegs oder auch die Arbeitsprozesse und -produkte der Schüler anregen und auf die später an Präsenztagen zurückgegriffen werden kann sowie in eine erneute Reflexion mit anderen Teilnehmenden digital zur Verfügung steht.

Die Vorteile des erfinderischen Assistenzsystems liegen in der Bereitstellung eines hybriden Lernraums (Blended Spaces), der die digitalen und analogen Lern- und Lehrkontexte zusammenführt und einen hohen Aktualisierungs- und Validierungsstatus der Lern- und Lehrinhalte ermöglicht.

Insbesondere können Lehrkräfte durch das erfinderischen Assistenzsystems aktuelle, verknüpfte, validierte Unterstützung mit einer auf Lern- und Lehrbetrieb dynamisch abstimmbaren Schnittstelle für bekannte und auch zukünftige digitaler Dienste, wie Messenger-Dienste, erhalten.

Unterstützt durch statistische Methoden und/oder Methoden der sogenannten künstlichen Intelligenz (KI/AI) und pädagogischen Systemen, die empirische Ergebnisse digitalisiert bereitstellen, wird dem Nutzer, hier z.B. einer angehenden Lehrkraft, ein digitales Assistenzsystem bereitgestellt mit dem die individuelle Selbstorganisations- und Mediennutzungskompetenz durch den Nutzer dynamisch wählbar ist und begleitende Aufgaben, z.B. organisatorische Qualifizierungsmaßnahmen und verwaltungstechnische Arbeiten und dergl. im Team, durch Dritte und/oder Werkzeuge geregelt wird.

Durch die Zeit- und Ortsunabhängigkeit für den Zugriff auf das erfinderische Assistenzsystem durch den Nutzer, kann dieser sein Zeitmanagement bestimmen und jederzeit sowie überall das System für Planungen, Dokumentationen und Wiederholungen nutzen. Dies trifft analog auf Lernende und Lehrende zu und erhöht die Effizienz der Fortbildung und der Nutzung von personellen und materiellen Ressourcen in Quantität und Qualität.

Durch die Mobilität und Kompatibilität des Systems über die Grenzen der Betriebssysteme oder Gerätegrenzen hinweg, ermöglicht es den lernzentrierten Gedanken des mobile-learning in der technologischen Gestaltung prototypisch für Qualifizierungsmaßnahmen für (angehender) Lehrkräfte umzusetzen.

Der Einsatz der KI-basierten und mobilen Technologie ermöglicht einen qualitativen Fortschritt in der individuellen Begleitung von Professionalisierungsprozessen in Qualifizierungsmaßnahmen als auch in der alltäglichen Praxis am Ausbildungs- und Arbeitsplatz.

Nachfolgend wird die Erfindung anhand der beiliegenden Abbildungen in der **Abbildungsbeschreibung** beschrieben, wobei diese die Erfindung erläutern sollen und nicht zwingend beschränkend zu werten sind:
Es zeigen:
- Abb. 1: eine Darstellung der Erfindung eines kontextübergreifenden und ad hoc einsetzbaren Assistenzsystems und
- Abb. 2: Darstellung des aktuellen Standes der Technik als Flussdiagramm.

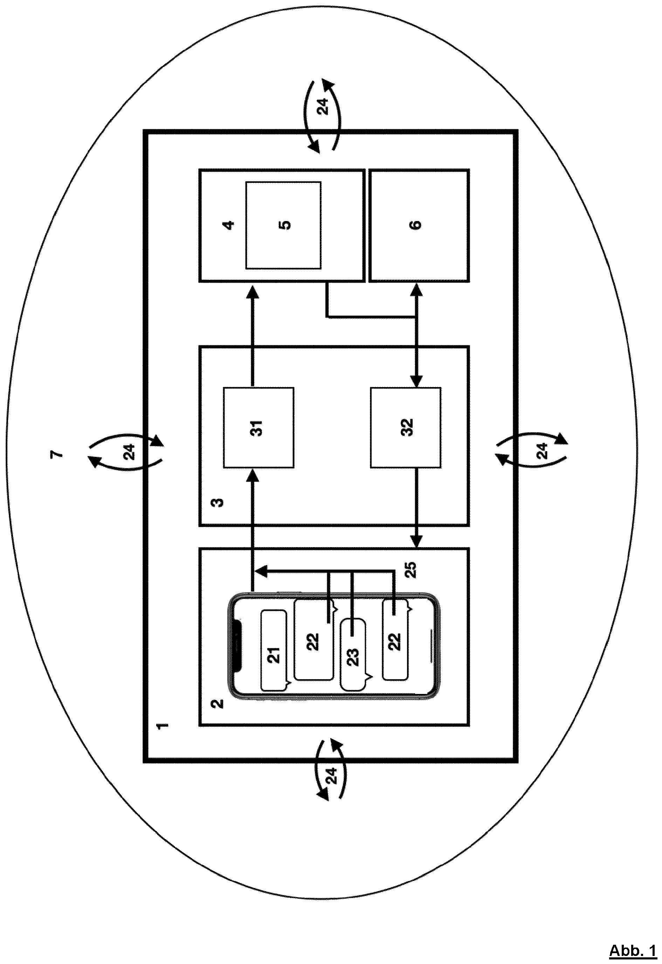

Nachfolgend sind die Bezugszeichen der Abbildung 1 aufgeführt:
- 1: Computerimplementiertes digitales Bildungsassistenzverfahren/-system
- 2: Mensch-Maschine-Interaktion
- 21: Input des Menschen
- 22: Output des Assistenzsystems
- 23: Reaktion des Menschen auf den Output
- 24: Ad-hoc-Mensch-Maschine-Interaktion in einer beliebigen Anforderungssituation während des Erkenntnisgewinnprozesses im Aus- und Fortbildungskontext
- 25: Lernprozess des Systems anhand der Reaktion des Menschen auf den maschinellen Output
- 3: (Bio)signalverarbeitungs- und -generierungseinheit
- 31: Erkennen multimodaler menschlicher Biosignale und Verarbeitung in maschinenlesbare Informationen
- 32: Generierung geeigneten Outputs
- 4: Dialogverarbeitungs- und generierungsschnittstelle / Dialogmanager
- 5: Datenbank-, Benutzerarbeits- und Verarbeitungssystem
- 6: Notfall Mensch-zu-Mensch-Schnittstelle
- 7: Beliebige Anforderungssituationen in Erkenntnisgewinnungsprozessen im Aus- und Fortbildungskontext

In **Abb. 1** ist eine Qualifizierungsmaßnahme, z. B. zum Einsatz digitaler Medien im Geometrieunterricht beispielhaft unter Nutzung des erfinderischen digitalen Assistenzsystems für eine angehende Lehrkraft als Nutzer beschrieben.

Das digitale Assistenzsystem ermöglicht dem Nutzer den Zugriff auf Inhalte durch Tools und kombinierte Tools im Planungsprozess adaptiv zum individuellen Kompetenzstand des jeweiligen Nutzers. Inhalte aus geeigneten Medien im Zusammenhang mit der Themen- und Zielbestimmung werden durch das digitale Assistenzsystem vorschlagen oder allgemeinere Hinweise zu Potentialen von digitalen Medien und deren Aktualität geliefert, die dann selbstbestimmt bei der Auswahl durch den Nutzer ausgewählt werden können.

Die Dokumentation des Unterrichts und von Lern(enden)-ergebnissen für die spätere Reflexion durch das System und Kontext durch Dritte, die wiederum im digitalen Assistenzsystem analysiert und abgelegt werden erzeugen einen dynamischen Regelkreis. Anders als lange

Papierbögen, lässt sich mittels mobiler Anwendungen multimedial Unterrichtsgeschehen dokumentieren und in situ mit Kommentaren versehen, die bei einer Betrachtung ex post womöglich verloren gehen würden. Außerdem lassen sich diese Dokumentationen so auch direkt mit anderen teilen, die dann unmittelbar auf ihrem mobilen Endgerät die Gelegenheit zur Rückmeldung haben und durch das digitale Assistenzsystem eine Analyse und Bewertung erfahren.

Allgemein zeichnet sich das mobile, digitale Assistenzsystem dadurch aus, dass es Kontext übergreifend, adaptiv und ad hoc in vielfältigen Situationen dem/der Nutzenden unmittelbar die gewünschten Ergebnisse und Antworten liefern kann, was im Vergleich dazu auf dem traditionellen Weg vermutlich mit Wartezeiten bzw. einen Ungleichgewicht von Aufwand und Nutzen einhergehen würde.

Durch seine Portabilität und dem schnellen Zugriff ermöglicht es auch Situationen, in denen mit traditionellen Mitteln bisher keine Beratung bzw. Support möglich wäre. So werden neue, hybride Handlungs- und Lernräume eröffnet, die die Qualität der Unterstützung in Professionalisierungsprozessen steigert.

Aufgrund der konversationsbasierten Oberfläche entfallen auch zahlreiche technische Hürden für die Nutzenden bei der Bedienung der Tools, die häufig auch zu einer Nichtinanspruchnahme oder Abbruchshandlungen führen.

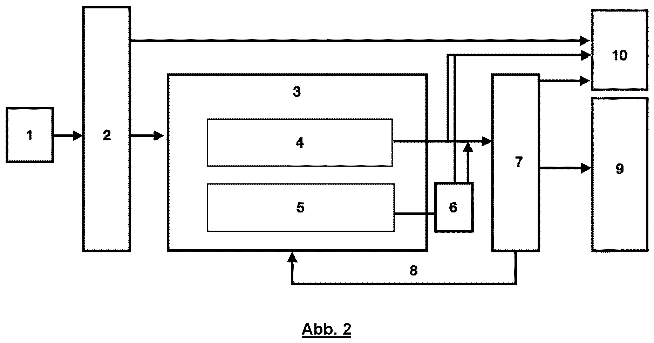

Nachfolgend sind die Bezugszeichen der Abbildung 2 aufgeführt, wobei die Abbildung 2 den Stand der Technik darstellt:
- 1: Konfliktsituation aus einer Anforderungssituation im Aus- und Fortbildungskontext heraus
- 2: Unterbrechung des Erkenntnisgewinnungsprozesse
- 3: Selbstorganisations- und Mediennutzungskompetenzen des Benutzers
- 4: technische Unterstützungsmöglichkeiten
- 5: nicht technische Unterstützungsmöglichkeiten
- 6: Wartezeit aufgrund unkalkulierbarer menschlicher Faktoren
- 7: Beurteilung der erlangten Zwischenergebnisse für den Erkenntnisgewinnungsprozess
- 8: Nochmaliger Zeitaufwand und Nutzung technischer bzw. nicht technischer Unterstützungsmöglichkeiten inkl. unkalkulierbarer menschlicher Faktoren
- 9: Wiederaufnahme des Erkenntnisgewinnungsprozesses
- 10: Vollständiger Abbruch des Erkenntnisgewinnungsprozesses

## Patentansprüche

1. Computerimplementiertes digitales Bildungsassistenzverfahren mit einem Datenbanksystem und einem Benutzerarbeitssystem und einem Verarbeitungssystem **umfassend die Schritte:**
a. Zugang des Nutzers durch Eingabe der Nutzerdaten in dem Benutzerarbeitssystem;
b. Aktualisierung und Feststellung des Qualifizierungsstatus durch Abgleich der Nutzerdaten mit dem Datenbanksystem;
c. Aktualisierung und Bereitstellung des Kontextes zur Bildung durch das Verarbeitungssystem unter Hinzunahme der Datenbank;
d. Erzeugung durch das Verarbeitungssystem und/oder interaktive Bearbeitung durch den Benutzer im Benutzerarbeitssystem wenigstens eines Bildungsdatensatzes des Kontextes durch den Nutzer, wobei das Verarbeitungssystem organisatorische, verwaltungstechnische und didaktische Regelkreise aufruft;
e. Archivierung und Training eines Bildungsassistenzsystem-Klassifikators mit den erzeugten und/oder bearbeiteten Inhalten aus Schritt d., wobei dies durch das Verarbeitungssystem erfolgt;
f. Validierung der Schritte b. bis e.;
g. Aktualisierung der Inhalte des Bildungsassistenzsystems.

2. Computerimplementiertes digitales Bildungsassistenzverfahren nach Anspruch 1,
**dadurch gekennzeichnet, dass**
Inhalte und/oder Relation und/oder Bezüge in das Datenbanksystem ergänzt und/oder aktualisiert einbringbar sind, wobei dies durch dozierende Benutzer erfolgt, wobei diese über das Benutzerarbeitssystem erfolgt.

3. Computerimplementiertes digitales Bildungsassistenzverfahren nach Anspruch 1 oder 2,
**dadurch gekennzeichnet, dass**
Eingaben in Schritt d. über ein multimodales Signalerkennungs- und Verarbeitungsprogramm erfolgen.

4. Computerimplementiertes digitales Bildungsassistenzsystem mit einem Datenbanksystem und einem Benutzerarbeitssystem und einem Verarbeitungssystem, und einem computerimplementierten digitalen Bildungsassistenzverfahren nach einem der vorangehenden Ansprüche,
**dadurch gekennzeichnet, dass**
das System aufweist:
- ein multimodales Signalerkennungs- und Verarbeitungstool vorgesehen ist, das menschliche Biosignale, ausgewählt aus:
elektrischen, mechanischen, kinetischen, akustischen, thermischen und/oder chemischen Signalen
in maschinenlesbare Informationen umsetzt und/oder in andere Modalitäten übersetzt,
und/oder
- ein Anwendungs- und Analysetool zur Anwendung und Analyse statistischer Methoden und/oder Methoden der künstlichen Intelligenz verfügt, wobei Relationen und Bezüge von Inhalten im Zugriff herstellbar sind und einen Bildungsassistenzsystem-Klassifikators trainieren kann,
und/oder
- ein Bereitstellungstool zur Bereitstellung pädagogischer Systeme, wobei dieses empirische Ergebnisse digitalisiert bereitstellt und eine Aufbereitung von Inhalten didaktisch unterstützt.
und/oder
- ein Authorisierungs-/Identifikationstool zur Verbindung über eine jeweilige Datenverbindung, Internetverbindung, Intranetverbindung zu der Datenbank und/oder dem Verarbeitungssystem.

5. Computerimplementiertes digitales Bildungsassistenzsystem nach dem vorangehenden Anspruch,
**dadurch gekennzeichnet, dass**
das Benutzerarbeitssystem auf einem Endgerät ausführbar ist, ausgewählt aus:
mobiles Endgerät, Smartphone, Phablet, Smartwatch, Smart speaker, Smartband, smart lenses, PC, Tablet, Notebook mit Sprach- und/oder Video- und/oder Texteingabe- und/oder Biosignalerkennungsmöglichkeit,
wobei wenigstens temporär ein Netzwerk- und/oder Internetzugang bei Verwendung besteht.
